# EUROPEAN PATENT SPECIFICATION

(11) **EP 3 208 362 B1**
(45) Date of publication and mention of the grant of the patent: **14.08.2019**
(21) Application number: 14903890.3
(22) Date of filing: 14.10.2014
(51) Int. Cl.: C23C 2/12, B60K 15/03, C21D 9/46, C23C 22/08, C23C 22/34, C23C 22/56, C23C 28/00, C22C 38/14, C22C 21/02

(54) **PLATED STEEL SHEET AND FUEL TANK**
PLATTIERTES STAHLBLECH UND KRAFTSTOFFTANK
TÔLE D'ACIER PLAQUÉE ET RÉSERVOIR DE CARBURANT

(43) Date of publication of application: 23.08.2017
(73) Proprietor: Nippon Steel Corporation, Tokyo (JP)
(72) Inventor: MAKI, Jun, Tokyo 100-8071 (JP); YAMAGUCHI, Shinichi, Tokyo 100-8071 (JP); NISHIMURA, Kunio, Tokyo 100-8071 (JP)
(74) Representative: Vossius & Partner Patentanwälte Rechtsanwälte mbB
(86) International application number: PCT/JP2014/077366
(87) International publication number: WO 2016/059678

(56) References cited:
- JP-A- S6 281 261
- JP-A- H10 183 368
- JP-A- H11 138 095
- JP-A- S62 161 944
- JP-A- 2002 029 270
- JP-A- 2014 210 954

## Description

### TECHNICAL FIELD

The present invention relates to a plated steel sheet suitable for a fuel tank of a truck, a bus and others, and a fuel tank made of the plated steel sheet.

### BACKGROUND ART

A fuel tank of an automobile is often determined at a final stage of designing in accordance with a design of a vehicle body, and a shape thereof is often complex. Therefore, in general, deep-drawing formability, impact resistance after forming, fuel resistance, corrosion resistance, salt-damage corrosion resistance, seam weldability, spot weldability, and the like are required of a material of the fuel tank of the automobile.

On the other hand, a shape of a fuel tank of a truck and a bus is relatively simple. Accordingly, formability for a complex shape is not required of a material of the fuel tank of the truck and the bus as much as required of the material of the fuel tank of the ordinary automobile. Further, many trucks and buses use light oil as fuel, and the light oil is not easily subjected to oxidation deterioration compared with gasoline. Accordingly, burning resistance and corrosion resistance are not required as much as required of a fuel tank for gasoline either. Meanwhile, improvement in manufacturing efficiency of the fuel tank, namely, ability to manufacture the fuel tank at a lower cost is required of a material for the fuel tank of the truck and the bus. In particular, improvement in weldability is required, and a material excellent in the seam weldability and the spot weldability is desired. Materials for fuel tanks of vehicles are described in Patent Literature 1 and Patent Literature 2. However, sufficient seam weldability and spot weldability cannot be obtained even by these materials.

In a fuel injection technology referred to as a common rail system, because very fine fuel is ejected, clogging of an injection hole sometimes occurs due to an effect of metal soap. For example, it is described that fatty acid zinc salt can cause clogging in Patent Literature 3. Therefore, a plated steel sheet containing zinc is not suitable for the fuel injection technology of the common rail system.

Al-plated steel sheets are described in Patent Literatures 4 to 7, but the sufficient seam weldability and spot weldability cannot be obtained even by the Al-plated steel sheets mentioned in these

### Patent Literatures.

### CITATION LIST

### PATENT LITERATURE

Patent Literature 1: Japanese Laid-open Patent Publication No. 10-72641
Patent Literature 2: International Publication Pamphlet No. 2007/004671
Patent Literature 3: Japanese Laid-open Patent Publication No. 2006-306018
Patent Literature 4: Japanese Laid-open Patent Publication No. 62-161944
Patent Literature 5: Japanese Laid-open Patent Publication No. 10-265928
Patent Literature 6: Japanese Laid-open Patent Publication No. 2008-223084
Patent Literature 7: Japanese Laid-open Patent Publication No. 10-176287

### SUMMARY OF INVENTION

### TECHNICAL PROBLEM

An object of the present invention is to provide a plated steel sheet which allows improvement in weldability while securing corrosion resistance to fuel when used for a fuel tank, and a fuel tank made thereof.

### SOLUTION TO PROBLEM

The present inventors have conducted earnest examination in order to study a cause by which sufficient seam weldability and spot weldability cannot be obtained in a conventional plated steel sheet.

As one of problems which are caused by seam welding of an Al-plated steel sheet, a blowhole defect may be cited. A cause of occurrence of the blowhole defect is considered as follows. In the seam welding in which upper and lower electrode wheels are used, Cu which is contained in the electrode wheel and Al which is contained in a plating layer react with each other to generate a reaction product on the interface between the electrode wheel and the plating layer due to heat. As a result, adhesion strength acts between the electrode wheel and the plated steel sheet with the reaction product interposed therebetween and the plated steel sheet is pulled by the electrode wheel when the electrode wheel is separated from the plated steel sheet, resulting in the occurrence of the blowhole defect. As the other of the problems which are caused by the seam welding of the Al-plated steel sheet, there may be cited a decrease in welding quality which is caused by adhesion of the reaction product to the electrode wheel and drop of this reaction product from the electrode wheel.

Both of these problems are caused by the reaction of Cu which is contained in the electrode wheel and Al which is contained in the plating layer. The inventors of the present application have focused attention on the reaction and found that it is very effective to decrease a coating weight on a surface of the plated steel sheet which comes in contact with the electrode wheel, namely, a surface which is to be an outer surface of a fuel tank. On the other hand, the other surface of the plated steel sheet is to be an inner surface of the fuel tank and comes in contact with fuel. Therefore, it is important that a coating weight on the other surface of the plated steel sheet allows securing of corrosion resistance to the fuel. Then, the inventors of the present application have conceived that, by making the coating weight on the surface which is to be the outer surface of the fuel tank lower than the coating weight on the surface which is to be the inner surface thereof, a characteristic which has a balance of weldability and corrosion resistance of the inner surface more than a conventional one can be obtained.

The inventors of the present application have obtained a finding in which the seam weldability is improved by phosphorus (P) in a steel sheet. It has become clear that when the coating weight is low in particular, the improvement in the seam weldability by P is remarkable. It is assumed that P in the steel sheet diffuses in an alloy layer in the plating layer containing Al, and AlP is formed on a surface of the plating layer, thereby suppressing a reaction with Cu which is contained in the electrode wheel.

The inventors of the present application have also obtained a finding in which a thickness of the steel sheet greatly affects the seam weldability and the spot weldability. In particular, when the steel sheet is thin, an effect of the coating weight easily appears greatly. Accordingly, when the steel sheet is thin, it is suitable to provide a difference of the coating weight between both surfaces of the plated steel sheet. On the other hand, when the plated steel sheet is thick, a large problem does not arise even though the difference of the coating weight therebetween is small.

Then, the inventors of the present application have conceived modes of the invention described below based on these findings.
(1) A plated steel sheet for a fuel tank comprising:
   a steel sheet;
   a first plating layer on a first surface of the steel sheet; and
   a second plating layer on a second surface of the steel sheet,
   wherein the steel sheet comprises a chemical composition represented by, in mass%,
   C: 0.0005% to 0.0800%,
   Si: 0.003% to 0.500%,
   Mn: 0.05% to 0.80%,
   P: 0.005% to 0.050%,
   S: 0.100% or less,
   Al: 0.080% or less,
   N: 0.0050% or less,
   Ti: 0.000% to 0.100%,
   Nb: 0.000% to 0.050%,
   B: 0.000% to 0.0100%, and
   the balance: Fe and impurities,
   wherein the first plating layer comprises:
      a first Al-Fe-Si alloy layer on the first surface; and
      a first Al-Si alloy layer on the first Al-Fe-Si alloy layer,
   wherein the second plating layer comprises a second Al-Fe-Si alloy layer on the second surface,
   wherein a coating weight of the first plating layer is 31 g/m² to 60 g/m², and
   wherein a coating weight of the second plating layer is 5 g/m² to 29 g/m², wherein the first plating layer is inside the tank body and the second plating layer is outside the tank body.
(2) The plated steel sheet according to (1), wherein the second plating layer comprises a second Al-Si alloy layer on the second Al-Fe-Si alloy layer.
(3) The plated steel sheet according to (1) or (2), wherein in the chemical composition,
   Ti: 0.001 to 0.100%,
   Nb: 0.001 to 0.050%, or
   B: 0.0003% to 0.0100%, or
   any combination thereof is satisfied.
(4) The plated steel sheet according to any one of (1) to (3), wherein a relationship of "(X - Y) - (26.7 - 13.3T) > 0" holds wherein X (g/m²) denotes the coating weight of the first plating layer, Y (g/m²) denotes the coating weight of the second plating layer, and T (mm) denotes a thickness of the steel sheet.
(5) The plated steel sheet according to any one of (1) to (4), further comprising a conversion coating that contains Cr, Zr, Ti, Si, or V, or a compound of any combination thereof on the second plating layer,
   wherein a coating weight of the conversion coating is 50 mg/m² to 1000 mg/m².
(6) A fuel tank comprising
   a tank body made of the plated steel sheet according to any one of (1) to (5),
   wherein the first plating layer is inside the tank body and the second plating layer is outside the tank body.

### ADVANTAGEOUS EFFECTS OF INVENTION

According to the present invention, since appropriate plating layers are included, it is possible to improve weldability while securing corrosion resistance to fuel when a plated steel sheet is used for a fuel tank.

### BRIEF DESCRIPTION OF DRAWINGS

Fig. 1 is a cross-sectional view illustrating a plated steel sheet according to a first embodiment;
Fig. 2 is a cross-sectional view illustrating a plated steel sheet according to a second embodiment;
Fig. 3 is a cross-sectional view illustrating a plated steel sheet according to a third embodiment;
Fig. 4 is a cross-sectional view illustrating a plated steel sheet according to a fourth embodiment;
Fig. 5 is a cross-sectional view illustrating a plated steel sheet according to a modified example of the third embodiment;
Fig. 6 is a cross-sectional view illustrating a plated steel sheet according to a modified example of the fourth embodiment; and
Fig. 7 is a view illustrating an optical micrograph of a cross section of a plated steel sheet.

### DESCRIPTION OF EMBODIMENTS

Hereinafter, embodiments of the present invention will be described referring to the accompanying drawings.

### (First embodiment)

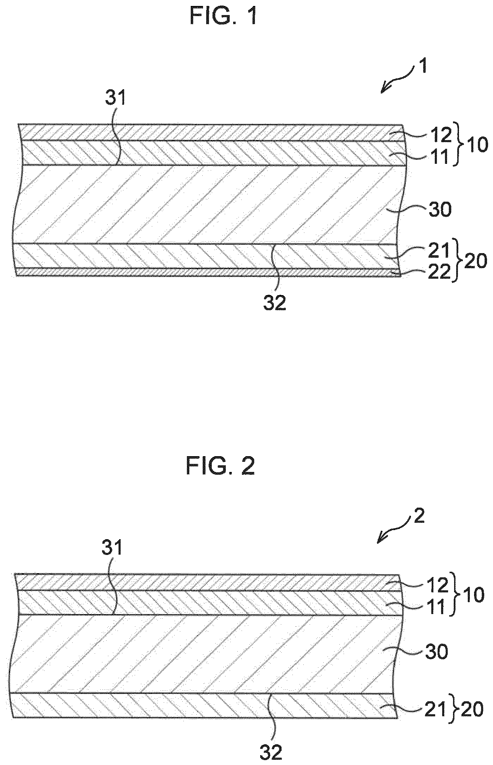

First, a first embodiment will be described. Fig. 1 is a cross-sectional view illustrating a plated steel sheet according to the first embodiment.

A plated steel sheet 1 according to the first embodiment includes: a steel sheet 30; a first plating layer 10 on a first surface 31 of the steel sheet 30; and a second plating layer 20 on a second surface 32 of the steel sheet 30 as illustrated in Fig. 1. The first plating layer 10 includes: a first Al-Fe-Si alloy layer 11 on the first surface 31; and a first Al-Si alloy layer 12 on the first Al-Fe-Si alloy layer 11. The second plating layer 20 includes: a second Al-Fe-Si alloy layer 21 on the second surface 32; and a second Al-Si alloy layer 22 on the second Al-Fe-Si alloy layer 21. A coating weight of the first plating layer 10 is 31 g/m² to 60 g/m², and a coating weight of the second plating layer 20 is 5 g/m² to 29 g/m².

Here, a chemical composition of the steel sheet 30 and a steel slab to be used in manufacture thereof will be described. In the following description, "%" which is a unit of content of each element contained in the steel sheet 30 and the steel slab to be used in the manufacture thereof means "mass%" as long as there is particularly no specification. The steel sheet 30 according to the embodiment and the steel slab to be used in the manufacture thereof have the chemical composition represented by, C: 0.0005% to 0.0800%, Si: 0.003% to 0.500%, Mn: 0.05% to 0.80%, P: 0.005% to 0.050%, S: 0.100% or less, Al: 0.080% or less, N: 0.0050% or less, Ti: 0.000% to 0.100%, Nb: 0.000% to 0.050%, B: 0.000% to 0.0100%, and the balance: Fe and impurities. As the impurities, those (Cu, Cr, Sn, Ni, and others) contained in a raw material such as ore or scrap and those (REM such as Ce, Ca, and others) contained in a manufacturing process are exemplified.

### (C: 0.0005% to 0.0800%)

C is an element which contributes to strength of the steel sheet. When a C content is less than 0.0005%, sufficient strength cannot be obtained. Accordingly, the C content is 0.0005% or more. In order to obtain higher strength, the C content is preferably 0.0010% or more. When the C content is more than 0.0800%, sufficient ductility cannot be obtained. It is rarely that a plated steel sheet for fuel tank of a truck and a bus is formed into a complex shape, but when the ductility is too low, forming may be difficult depending on a portion. Accordingly, the C content is 0.0800% or less. In order to obtain more excellent ductility, the C content is preferably 0.0500%.

### (Si: 0.003% to 0.500%)

Si is an element which contributes to the strength of the steel sheet. When a Si content is less than 0.003%, the sufficient strength cannot be obtained. Accordingly, the Si content is 0.003% or more. When the Si content is more than 0.500%, sufficient platability cannot be obtained. Accordingly, the Si content is 0.500% or less.

### (Mn: 0.05% to 0.80%)

Mn is an element which contributes to the strength of the steel sheet. Mn also contributes to suppression of hot shortness caused by S in hot rolling. When a Mn content is less than 0.05%, effects due to the above-described actions cannot be sufficiently obtained. Accordingly, the Mn content is 0.05% or more. When the Mn content is more than 0.80%, sufficient workability cannot be obtained. Accordingly, the Mn content is 0.80% or less.

### (P: 0.005% to 0.050%)

P is an element which increases the strength of the steel sheet by solid-solution strengthening. Further, as described above, P is an element which contributes also to improvement in seam weldability when the coating weight is small. When a P content is less than 0.005%, effects due to the above-described actions cannot be sufficiently obtained. Accordingly, the P content is 0.005% or more. When the P content is more than 0.050%, sufficient toughness cannot be obtained. P segregates on grain boundaries easily, and when the strength of the steel sheet is high in particular, P causes low temperature embrittlement. Accordingly, the P content is 0.050% or less.

### (S: 0.100% or less)

S is not an essential element and is contained as an impurity in the steel sheet, for example. S is an element which deteriorates hot workability and workability. Therefore, the lower an S content is, the better. When the S content is more than 0.100% in particular, these adverse effects are remarkable. Accordingly, the S content is 0.100% or less. It takes cost to reduce the S content, and the cost remarkably increases to reduce to less than 0.001%. Therefore, the S content may be 0.001% or more.

### (Al: 0.080% or less)

Al is not an essential element and is contained as an impurity in the steel sheet, for example. Al forms an oxide made of alumina mainly in the steel sheet to cause local deformability to deteriorate. Therefore, the lower an Al content is, the better. When the Al content is more than 0.080% in particular, these adverse effects are remarkable. Accordingly, the Al content is 0.080% or less. Al is effective in deoxidation, and when the Al content is less than 0.005%, the deoxidation in steelmaking is insufficient, and thereby the oxide remains in a large amount in the steel sheet and sufficient local deformability cannot be sometimes obtained. Therefore, the Al content may be 0.005% or more.

### (N: 0.0050% or less)

N is not an essential element and is contained as an impurity in the steel sheet, for example. N generates a precipitate and causes the toughness of a heat affected zone to deteriorate. Therefore, the lower a N content is, the better. When the N content is more than 0.0050% in particular, a deterioration of the toughness of the heat affected zone is remarkable. Accordingly, the N content is 0.0050% or less. It takes cost to reduce the N content, and the cost remarkably increases to reduce to less than 0.0010%. Therefore, the N content may be 0.0010% or more .

Ti, Nb, and B are not essential elements but optional elements which may be appropriately contained in the plated steel sheet and the steel slab up to predetermined limit amounts.

### (T: 0.000% to 0.100%, Nb: 0.000% to 0.050%, B: 0.000% to 0.0100%)

Ti and Nb are elements which form fine carbides and contribute to improvement in the workability of the steel sheet. B is an element which improves secondary workability of the steel sheet. Accordingly, one or any combination selected from the group consisting of these elements may be contained. However, when a Ti content is more than 0.100%, an effect due to the above-described action is saturated, which only increases the cost uselessly, when a Nb content is more than 0.050%, the effect due to the above-described action is saturated, which only increases the cost uselessly, and when a B content is more than 0.0100%, the sufficient workability cannot be obtained. Accordingly, the Ti content is 0.100% or less, the Nb content is 0.050% or less, and the B content is 0.0100% or less. In order to obtain the effects due to the above-described actions securely, both of the Ti content and the Nb content are preferably 0.001% or more, and the B content is preferably 0.0003% or more. That is, it is preferred that "Ti: 0.001 to 0.100%", "Nb: 0.001 to 0.050%", or "B: 0.0003% to 0.0100%", or any combination thereof is satisfied.

Next, coating weights of the first plating layer 10 and the second plating layer 20 will be described.

As described above, the first plating layer 10 includes the first Al-Fe-Si alloy layer 11 and the first Al-Si alloy layer 12, and the second plating layer 20 includes the second Al-Fe-Si alloy layer 21 and the second Al-Si alloy layer 22. Thicknesses of the Al-Fe-Si alloy layers are not particularly limited, but because the Al-Fe-Si alloy layers are hard and brittle, too thick Al-Fe-Si alloy layers do not sometimes allow good workability to be obtained. Accordingly, both the thicknesses of the first Al-Fe-Si alloy layer 11 and the second Al-Fe-Si alloy layer 21 are preferably each 4 µm or less. Further, a thickness of the first Al-Si alloy layer 12 is preferably 3 µm or more in view of securing corrosion resistance, workability and others.

Although details will be described later, the first plating layer 10 and the second plating layer 20 are formed by a hot-dip plating method by using a plating bath containing Al and Si, for example. In the case, the first Al-Si alloy layer 12 having substantially the same composition as a composition of the plating bath is included in the first plating layer 10, and the second Al-Si alloy layer 22 having substantially the same composition as the composition of the plating bath is included in the second plating layer 20. The first Al-Si alloy layer 12 and the second Al-Si alloy layer 22 contribute to improvement in the corrosion resistance.

As described above, the coating weight of the first plating layer 10 is 31 g/m² to 60 g/m², and the coating weight of the second plating layer 20 is 5 g/m² to 29 g/m².

When a fuel tank is manufactured using a plated steel sheet, one surface of the plated steel sheet is to be an inner surface and the other surface is to be an outer surface. Then, the surface which is to be the inner surface is exposed to fuel and the surface which is to be the outer surface is exposed to a welding environment. Accordingly, the coating weight is higher in the surface which is to be the inner surface than the surface which is to be the outer surface. Hence, in the embodiment, the coating weights are made different from each other between the first plating layer 10 and the second plating layer 20. When the fuel tank is manufactured using the plated steel sheet 1 according to the embodiment, forming is performed so that the first plating layer 10 with thicker coating is to be an inner surface side and the second plating layer 20 with thinner coating is to be an outer surface side.

As described above, the plated steel sheet 1 is formed so that the second plating layer 20 is an outer side of the fuel tank. Accordingly, the second plating layer 20 greatly affects the seam weldability and spot weldability. Further, the second plating layer 20 contributes to improvement in corrosion resistance to salt damage and the like. When the coating weight of the second plating layer 20 is more than 29 g/m², good seam weldability and spot weldability cannot be obtained. Accordingly, the coating weight of the second plating layer 20 is 29 g/m² or less. The second plating layer 20 is formed by the hot-dip plating method, for example, as described later, and it is difficult to form the second plating layer 20 with the coating weight of less than 5 g/m². Accordingly, the coating weight of the second plating layer 20 is 5 g/m² or more.

As described above, the plated steel sheet 1 is formed so that the first plating layer 10 is an inner side of the fuel tank. Accordingly, the first plating layer 10 greatly affects corrosion resistance to a fuel such as light oil and gasoline and corrosion resistance to an organic acid such as formic acid and acetic acid which is generated with oxidation and deterioration of the fuel. When the coating weight of the first plating layer 10 is less than 31 g/m², sufficient corrosion resistance cannot be obtained. Accordingly, the coating weight of the first plating layer 10 is 31 g/m² or more. As described later, the first plating layer 10 is formed by the hot-dip plating method together with the second plating layer 20, and it is difficult to form the first plating layer 10 with the coating weight of more than 60 g/m², since the coating weight of the second plating layer 20 is 29 g/m² or less. Accordingly, the coating weight of the first plating layer 10 is 60 g/m² or less.

The coating weight may be measured by an ordinary method. For example, it is preferable that the coating weight is measured with fluorescent X-ray, where a calibration curve between the coating weight measured by the gravimetric method and a fluorescent X-ray intensity is created in advance. These measurements are performed at a central portion and both end portions (for example, positions 50 mm close to a center from both edges) in the sheet width direction of the plated steel sheet, and an average value of measured values at these three points is used as a representative value of the measured surface.

A specific relationship between a difference between the coating weight of the first plating layer 10 and the coating weight of the second plating layer 20 and a thickness of the steel sheet 30 preferably holds. Specifically, when X (g/m²) denotes the coating weight of the first plating layer 10, Y (g/m²) denotes the coating weight of the second plating layer 20, and T (mm) denotes the thickness of the steel sheet 30, a relationship of "(X - Y) - (26.7 - 13.3T) > 0" preferably holds. This relationship means that it is preferred that the thinner the steel sheet 30 is, the larger the difference of the coating weights is. In both seam welding and spot welding, a reaction of copper contained in a welding electrode and a metal element contained in the plating layer is an underlying cause of a decrease in weldability. Accordingly, it is considered that the thinner the steel sheet is, the shorter a distance from a molten portion to a surface of the plated steel sheet which is in contact with the welding electrode is, and thereby an effect thereof is remarkably exerted.

Next, a manufacturing method of the plating steel sheet 1 according to the first embodiment will be described.

In this manufacturing method, a steel slab is obtained from molten steel having the above-described chemical composition. The steel slab may be obtained by, for example, continuous casting. A thin slab whose thickness is 100 mm or less is cast, and the thin slab may be used as the steel slab.

Next, hot rolling of the steel slab is performed. A condition of the hot rolling is not particularly limited. A heating temperature is 1400°C or less, for example, and preferably 1250°C or less. Further, a finish temperature of final rolling is preferably Ar3 point or more, and a coiling temperature is preferably 600°C to 750°C. Thus, a hot-rolled steel sheet may be obtained.

Next, plating treatment of the hot-rolled steel sheet is performed. In this embodiment, the coating weights are made different from each other between the obverse and the reverse of the hot-rolled steel sheet. The plating treatment is performed by the hot-dip plating method by using the plating bath containing Al and Si, for example.

When the plating treatment by the hot-dip plating method is performed, the coating weights is controlled by a gas wiping method, for example. The coating weights may be controlled with a gas pressure, a line speed, a steel sheet-nozzle inter-distance, a nozzle gap, a nozzle shape, or others. In this embodiment, in order to make the coating weights different from each other between the obverse and the reverse of the hot-rolled steel sheet, the gas pressure, the steel sheet-nozzle inter-distance, or the nozzle gap, or any combination thereof is made different between the obverse and the reverse, for example. Industrially, it is assumed that on a plating production line to be used for manufacturing the plated steel sheet according to the embodiment, a steel sheet whose coating weights are the same between the obverse and the reverse of the steel sheet is also manufactured. Therefore, the coating weights are preferably made different from each other between the obverse and the reverse by an adjustment of the steel sheet-nozzle inter-distance and/or the gas pressure.

When the plating treatment is performed using the plating bath containing Al and Si, Al and Si, which are contained in the plating bath, react with Fe in the hot-rolled steel sheet to form the Al-Fe-Si alloy layers constituted of an intermetallic compound on surface layer portions of the hot-rolled steel sheet. Further, on the Al-Fe-Si alloy layers, the Al-Si alloy layers having substantially the same composition as that of the plating bath are formed.

Thus, it is possible to manufacture the plated steel sheet 1 including the steel sheet 30, the first Al-Fe-Si alloy layer 11, the first Al-Si alloy layer 12, the second Al-Fe-Si alloy layer 21, and the second Al-Si alloy layer 22.

The plated steel sheet 1 may be manufactured not only by performing a plating treatment for a hot-rolled steel sheet but also by forming a cold-rolled steel sheet by performing cold rolling of the hot-rolled steel sheet and performing the plating treatment for the cold-rolled steel sheet. The plated steel sheet 1 may be manufactured also by performing recrystallization annealing of the cold-rolled steel sheet and thereafter performing the plating treatment. A condition of the cold rolling is not particularly limited. For example, a reduction ratio in the cold rolling may be 40% to 80% as general, for example. A condition of the recrystallization annealing is not particularly limited either.

A method of the plating treatment is not limited to the hot-dip plating method. For example, the plating treatment may be performed by a fused-salt electrolysis method or a vapor deposition method. However, the hot-dip plating method is more excellent in an aspect of an industrial cost than the fused-salt electrolysis method and the vapor deposition method. Accordingly, the plating treatment is preferably performed by the hot-dip plating method.

When the plating treatment is performed by the hot-dip plating method, the plating bath preferably contains Al by 85 mass% or more. Further, when the Si content of the plating bath is less than mass%, the Al-Fe-Si alloy layers grow too much after the plating treatment and the workability sometimes decreases.

When the Si content of the plating bath is more than 15 mass%, the sufficient corrosion resistance cannot be sometimes obtained. Accordingly, the Si content of the plating bath is preferably 15 mass% or less, and more preferably 12 mass% or less.

When the plating treatment is performed by the hot-dip plating method, the thicknesses of the Al-Fe-Si alloy layers may be adjusted by a bath temperature, a bath composition, a sheet temperature upon entering the bath, a cooling rate, and the line speed, and for example, are each 2 µm to 5 µm. The thinner the plated steel sheet is manufactured, the higher the line speed can be made, and the higher the line speed is, the thinner the Al-Fe-Si alloy layers is. Since the Al-Fe-Si alloy layers are hard and brittle as described above, the too thick Al-Fe-Si alloy layers do not sometimes allow the good workability to be obtained. Accordingly, both the thicknesses of the first Al-Fe-Si alloy layer 11 and the second Al-Fe-Si alloy layer 21 are preferably each set to 4 µm or less.

According to the first embodiment, it is possible to obtain excellent weldability and also obtain good corrosion resistance to fuel. Accordingly, the plated steel sheet contributes to improvement in productivity of the fuel tank for a truck or a bus and is suitable as a material of the fuel tank for the truck or the bus.

The plating layers are preferably zinc-free. This is because clogging of an injection hole with generation of metal soap is avoided.

### (Second embodiment)

Next, a second embodiment will be described. Fig. 2 is a cross-sectional view illustrating a plated steel sheet according to the second embodiment.

A plated steel sheet 2 according to the second embodiment does not have an Al-Si alloy layer 22 on a surface layer of a second surface 32 side of a steel sheet 30 as illustrated in Fig. 2. Other configurations are the same as those of the plated steel sheet 1 according to the first embodiment. According to the second embodiment, since a layer which is exposed to the outside on the second surface 32 side is an Al-Fe-Si alloy layer 21, more excellent seam weldability and spot weldability can be obtained and adhesiveness to an outer surface coating (coating film) is better.

The plated steel sheet 2 according to the second embodiment may be manufactured by the following two types of methods, for example. In a first manufacturing method, a plating layer 20 is reheated after performing the same treatment as that in the first embodiment. In a second manufacturing method, a coating weight is made as small as possible, and a reaction of Al and Si with Fe is accelerated by preheating of a plating bath while keeping a bath temperature of the plating bath relatively high.

### (Third embodiment)

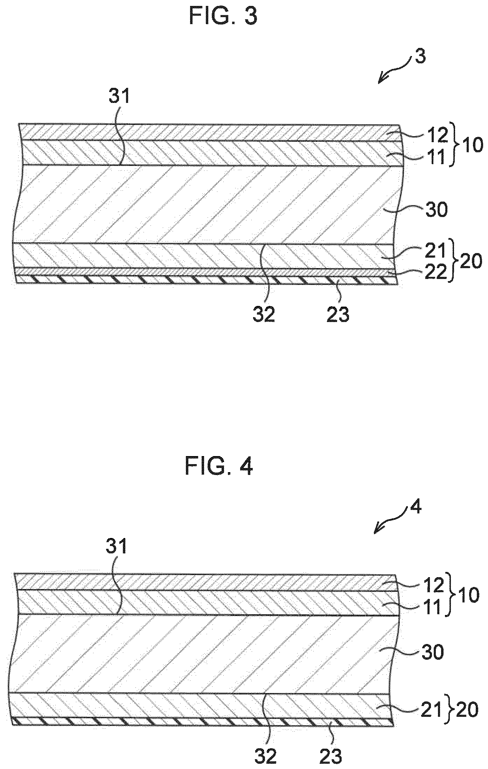

Next, a third embodiment will be described. Fig. 3 is a cross-sectional view illustrating a plated steel sheet according to the third embodiment.

A plated steel sheet 3 according to the third embodiment includes a conversion coating 23 on a second plating layer 20 as illustrated in Fig. 3. Other configurations are the same as those in the first embodiment. According to the third embodiment, since the conversion coating 23 is included, more excellent seam weldability and spot weldability can be obtained and adhesiveness to an outer surface coating (coating film) is better.

The conversion coating 23 contains, for example, Cr, Zr, Ti, Si, or V, or a compound of any combination thereof. When a coating weight of the conversion coating 23 is less than 50 mg/m², an effect of improving the seam weldability and the spot weldability cannot be sometimes sufficiently obtained. Accordingly, the coating weight of the conversion coating 23 is preferably 50 mg/m² or more. When the coating weight of the conversion coating 23 is more than 1000 mg/m², surface resistance of the plated steel sheet 3 is too large, and thereby the seam weldability and/or the spot weldability sometimes decrease/decreases adversely. Accordingly, the coating weight of the conversion coating 23 is preferably 1000 mg/m² or less.

In measurement of the coating weight of the conversion coating, similarly to that of a coating weight, for example, it is preferable that the coating weight is measured with fluorescent X-ray, where a calibration curve between the coating weight measured by the gravimetric method and a fluorescent X-ray intensity is created in advance. These measurements are performed at a central portion and both end portions (for example, positions 50 mm close to a center from both edges) in the sheet width direction of the plated steel sheet, and an average value of measured values at these three points is used as a representative value of the measured surface.

### (Fourth embodiment)

Next, a fourth embodiment will be described. Fig. 4 is a cross-sectional view illustrating a plated steel sheet according to the fourth embodiment.

A plated steel sheet 4 according to the fourth embodiment includes a conversion coating 23 on a second plating layer 20 as illustrated in Fig. 4. Other configurations are the same as those in the second embodiment. According to the fourth embodiment, the effect in the second embodiment and the effect in the third embodiment can be obtained.

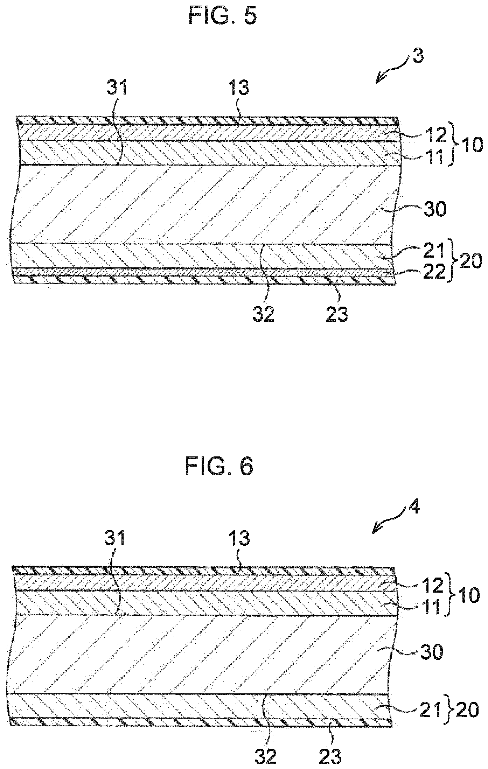

As illustrated in Fig. 5, the plated steel sheet 3 according to the third embodiment may include a conversion coating 13 on a first plating layer 10. As illustrated in Fig. 6, the plated steel sheet 4 according to the fourth embodiment may include a conversion coating 13 on a first plating layer 10. The conversion coating 13 may be formed together with the conversion coating 23.

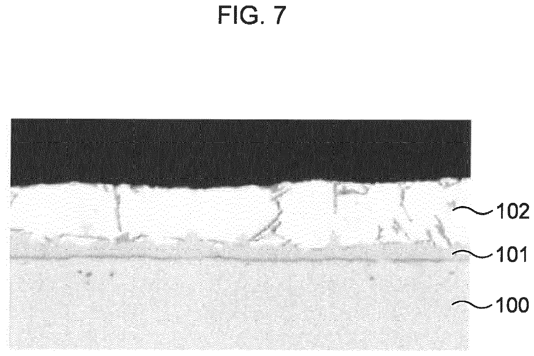

An Al-Si alloy layer and an Al-Fe-Si alloy layer may be confirmed by a cross sectional microscopic observation. Fig. 7 is a view illustrating an optical micrograph of a cross section of a plated steel sheet. As illustrated in Fig. 7, the Al-Si alloy layer and the Al-Fe-Si alloy layer can be distinguished clearly by an observation with an optical microscope. They may be confirmed by an elemental analysis with SEM (scanning electron microscope)-EDS (energy dispersion X-ray spectroscopy), EPMA (electron probe micro-analyzer), or the like.

Next, a method of manufacturing a fuel tank using a plated steel sheet according to an embodiment of the present invention will be described. First, the plated steel sheet is subjected to bending to be formed as a square tube, and tank heads are butt-welded at both end openings of this square tube to produce a tank body. When the square tube is produced, a second plating layer with thinner coating is used as an outer surface side. Partition plates having fuel flow holes are disposed inside the tank body, and the partition plates and the tank body are spot-welded to partition the inside of the tank body into a plurality of divided chambers. Thereafter, an oil filler is provided at an upper surface of the tank body. An inner surface (a surface on which the first plating layer is exposed) of the fuel tank has no coating typically, and an outer surface thereof is often coated. A coating type and a coating film thickness of the outer surface are not particularly limited. For example, it is preferable to form a coating film whose thickness is about 10 µm to 100 µm using a melamine-based water-soluble resin. Thus, the fuel tank may be manufactured. The thicker the coating film is, the more excellent a rust prevention property of the outer surface is, but a cost also increases, and therefore an appropriate thickness is preferably selected depending on a position of a vehicle body where the fuel tank is placed, or the like. Such a fuel tank is suitable as a fuel tank of a truck and a bus.

Note that the above-described embodiments merely illustrate concrete examples of implementing the present invention, and the technical scope of the present invention is not to be construed in a restrictive manner by these embodiments.

### EXAMPLES

Next, examples of the present invention will be described. A condition of the examples is one condition example which is adopted in order to confirm a possibility of implementation and an effect of the present invention, and the present invention is not limited to this one condition example.

### (First experiment)

In a first experiment, molten steels (steel types A to N) having chemical compositions presented in Table 1 were tapped from a converter to obtain steel slabs, and hot rolling was performed at a heating temperature of 1220°C, at a finishing temperature of 870°C, and at a coiling temperature of 630°C. Blank columns in Table 1 indicate that contents of relevant elements were below detection limits. Then, cold rolling of hot-rolled steel sheets was performed at a reduction ratio of 70% to obtain cold-rolled steel sheets whose thickness was 1.4 mm. Thereafter, annealing and plating treatment were performed on a continuous hot-dip plating line. An annealing temperature was 780°C, a plating bath temperature was 660°C, and a composition of a plating bath was 91 mass% Al-9 mass% Si. An adjustment of coating weights was performed by a gas wiping method after the plating treatment. A condition of gas wiping on the obverse and the reverse of the cold-rolled steel sheets was controlled independently, and the respective coating weights were adjusted as presented in Table 2. Thus, various plated steel sheets with plating layers were produced. Here, in the plating layers formed on the obverse and the reverse thereof, the one whose coating weight is larger is referred to as a first plating layer and the other one, whose coating weight is smaller, is referred to as a second plating layer. In a sample No. 4, since the coating weights of the obverse and the reverse thereof are equal, one is referred to the first plating layer and the other is referred to the second plating layer as a matter of convenience. Any of the plating layers formed in samples No. 1 to No. 23 presented in Table 2 contained a Fe-Si-Al alloy layer and a Si-Al alloy layer. Fe which dissolved from the cold-rolled steel sheets or the like mixed by about 2.5 mass% in the plating bath. Underlines in Table 1 indicate that numeric values thereof are out of the range of the present invention.

**[Table 1]**

| STEEL TYPE | CHEMICAL COMPONENT (MASS%) | | | | | | | | | | REMARKS |
|---|---|---|---|---|---|---|---|---|---|---|---|
| | C | Si | Mn | P | S | Al | N | Ti | Nb | B | |
| A | 0.0360 | 0.009 | 0.14 | 0.003 | 0.006 | 0.03 | 0.0023 | | | 0.0017 | COMPARATIVE EXAMPLE |
| B | 0.0360 | 0.009 | 0.14 | 0.007 | 0.006 | 0.03 | 0.0023 | | | 0.0017 | INVENTIVE EXAMPLE |
| C | 0.0360 | 0.009 | 0.14 | 0.013 | 0.006 | 0.03 | 0.0023 | | | 0.0017 | INVENTIVE EXAMPLE |
| D | 0.0360 | 0.009 | 0.14 | 0.029 | 0.006 | 0.03 | 0.0023 | | | 0.0017 | INVENTIVE EXAMPLE |
| E | 0.0360 | 0.009 | 0.14 | 0.066 | 0.006 | 0.03 | 0.0023 | | | 0.0017 | COMPARATIVE EXAMPLE |
| F | 0.0008 | 0.004 | 0.06 | 0.006 | 0.004 | 0.02 | 0.0015 | 0.011 | 0.005 | 0.0003 | INVENTIVE EXAMPLE |
| G | 0.0270 | 0.021 | 0.21 | 0.008 | 0.011 | 0.04 | 0.0033 | | 0.012 | | INVENTIVE EXAMPLE |
| H | 0.0500 | 0.120 | 0.55 | 0.015 | 0.017 | 0.05 | 0.0042 | | | | INVENTIVE EXAMPLE |
| I | 0.0200 | 0.080 | 0.76 | 0.034 | 0.035 | 0.04 | 0.0021 | | | | INVENTIVE EXAMPLE |
| J | 0.0700 | 0.270 | 0.41 | 0.045 | 0.044 | 0.02 | 0.0050 | | | | INVENTIVE EXAMPLE |
| K | 0.0300 | 0.030 | 0.29 | 0.009 | 0.008 | 0.05 | 0.0027 | 0.033 | | | INVENTIVE EXAMPLE |
| L | 0.0021 | 0.120 | 0.21 | 0.007 | 0.003 | 0.02 | 0.0016 | | 0.024 | | INVENTIVE EXAMPLE |
| M | 0.0015 | 0.140 | 0.25 | 0.013 | 0.005 | 0.04 | 0.0040 | 0.042 | | 0.0012 | INVENTIVE EXAMPLE |
| N | 0.0400 | 0.190 | 0.61 | 0.011 | 0.021 | 0.06 | 0.0055 | 0.037 | 0.021 | | INVENTIVE EXAMPLE |

Thereafter, evaluation of seam weldability and spot weldability of the plated steel sheets was performed. Further, evaluation of corrosion resistance to an organic acid was also performed. Table 2 also presents these results. Underlines in Table 2 indicate that items thereof are out of the range of the present invention.

In the evaluation of the seam weldability, two test pieces whose size was 100 mm × 500 mm were overlapped and seam welded so that the second plating layers were the outside. As for the seam welding, an electrode diameter was 250 mm, an electrode tip R was 8 mm, pressurizing force was 500 kgf, a welding current was 15 kA, 2on-1off (60 Hz), and a welding speed was 4 m/min. Then, 100 sets of welds were performed continuously, and a condition of a nugget of the 100th set was observed. A maximum diameter of blowholes which occurred per a weld line of 100 mm was measured by an X-ray method. The evaluation of the seam weldability was performed based on the maximum diameter of the blowholes, and the sample in which the maximum diameter of the blowholes was 0.1 mm or less was regarded as ⊚, the sample in which the maximum diameter of the blowholes was more than 0.1 mm to 0.5 mm or less was regarded as ○, and the sample in which the maximum diameter of the blowholes was more than 0.5 mm was regarded as ×. In general, when a reaction of an electrode and the plated steel sheet is vigorous, the electrode and the plated steel sheet tend to adhered to each other, and force of peeling the plated steel sheet occurs. Therefore, the more vigorous the reaction is, the larger the blowhole are.

In the evaluation of the spot weldability, two test pieces whose size was 230 mm × 320 mm were overlapped and spot welded so that the second plating layers are the outside. As for the spot welding, a DR electrode with a tip of 6φ-40R was used, pressurizing force was 250 kgf, an energization was 12 cycles (60Hz), and a welding current was 8 kA. Then, 1000 spot welds were performed, and a condition of a nugget of the 1000th spot was observed. The evaluation of the spot weldability was performed based on a nugget diameter, and the sample in which the nugget diameter was 4 mm or more was regarded as ○ and the sample in which the nugget diameter was less than 4 mm was regarded as ×.

In the evaluation of the corrosion resistance, a corrosive solution which contained about 100 ppm of formic acid and about 200 ppm of acetic acid in water was prepared. The corrosive solution was adjusted by mixing 10 vol% of water into a mixture of oxidized gasoline in accordance with JIS K2287and not oxidized gasoline. Then, test pieces whose size was 30 mm × 40 mm and on which an edge seal was put were immersed in the corrosive solution of 500 mL for 1000 hours. A temperature of the corrosive solution was 45°C. The evaluation of the corrosion resistance was performed based on a maximum corrosion depth in the first plating layers, and the sample in which the maximum corrosion depth was more than 0.2 mm was regarded as × and the sample in which the maximum corrosion depth was 0.2 mm or less was regarded as ○.

**[Table 2]**

| SAMPLE No. | STEEL TYPE | COATING WEIGHT (g/m²) | | SEAM WELDABILITY | SPOT WELDABILITY | CORROSION RESISTANCE OF INNER SURFACE | REMARKS |
|---|---|---|---|---|---|---|---|
| | | FIRST PLATING LAYER | SECOND PLATING LAYER | | | | |
| 1 | B | 34 | 12 | ⊚ | ○ | ○ | INVENTIVE EXAMPLE |
| 2 | B | 34 | 19 | ⊚ | ○ | ○ | INVENTIVE EXAMPLE |
| 3 | B | 34 | 25 | ⊚ | ○ | ○ | INVENTIVE EXAMPLE |
| 4 | B | 34 | 34 | × | × | ○ | COMPARATIVE EXAMPLE |
| 5 | B | 25 | 19 | ⊚ | ○ | × | COMPARATIVE EXAMPLE |
| 6 | B | 41 | 19 | ⊚ | ○ | ○ | INVENTIVE EXAMPLE |
| 7 | B | 50 | 24 | ⊚ | ○ | ○ | INVENTIVE EXAMPLE |
| 8 | B | 57 | 28 | ⊚ | ○ | ○ | INVENTIVE EXAMPLE |
| 9 | B | 66 | 38 | × | × | ○ | COMPARATIVE EXAMPLE |
| 10 | F | 38 | 21 | ⊚ | ○ | ○ | INVENTIVE EXAMPLE |
| 11 | F | 41 | 27 | ⊚ | ○ | ○ | INVENTIVE EXAMPLE |
| 12 | A | 35 | 26 | × | × | ○ | COMPARATIVE EXAMPLE |
| 13 | C | 39 | 20 | ⊚ | ○ | ○ | INVENTIVE EXAMPLE |
| 14 | D | 41 | 19 | ⊚ | ○ | ○ | INVENTIVE EXAMPLE |
| 15 | E | 40 | 17 | CRACKS OCCURRED | CRACKS OCCURRED | ○ | COMPARATIVE EXAMPLE |
| 16 | G | 39 | 25 | ⊚ | ○ | ○ | INVENTIVE EXAMPLE |
| 17 | H | 41 | 19 | ⊚ | ○ | ○ | INVENTIVE EXAMPLE |
| 18 | I | 33 | 24 | ⊚ | ○ | ○ | INVENTIVE EXAMPLE |
| 19 | J | 43 | 22 | ⊚ | ○ | ○ | INVENTIVE EXAMPLE |
| 20 | K | 39 | 18 | ⊚ | ○ | ○ | INVENTIVE EXAMPLE |
| 21 | L | 42 | 23 | ⊚ | ○ | ○ | INVENTIVE EXAMPLE |
| 22 | M | 31 | 17 | ⊚ | ○ | ○ | INVENTIVE EXAMPLE |
| 23 | N | 31 | 21 | ⊚ | ○ | ○ | INVENTIVE EXAMPLE |

As presented in Table 2, it was possible to obtain good weldability and corrosion resistance of inner surfaces in the invention examples.

On the other hand, in the sample No. 4, since the coating weight of the second plating layer was excessive, sufficient seam weldability and spot weldability could not be obtained. In the sample No. 5, since the coating weight of the first plating layer was too small, sufficient corrosion resistance of an inner surface thereof could not be obtained. In the sample No. 9, since the coating weight of the first plating layer was excessive, and according to this the coating weight of the second plating layer was also excessive, the sufficient seam weldability and spot weldability could not be obtained. In the sample No. 12, since the P content of the steel sheet was too small, the sufficient seam weldability and spot weldability could not be obtained. In the sample No. 15, since the P content of the steel sheet was excessive, cracks occurred in the nuggets in both the seam weld and the spot weld.

### (Second experiment)

In a second experiment, cold-rolled steel sheets whose thickness was 1.4 mm were obtained using the steel type B as described above, and similarly to the first experiment, the annealing and the plating treatment were performed for these cold-rolled steel sheets on the continuous hot-dip plating line. A coating weight of first plating layers was 40 g/m² and a coating weight of second plating layers was 19 g/m². Thus, plated steel sheets with the plating layers were produced. Moreover, chemical solutions presented in Table 3 were applied to both surfaces of the plated steel sheets and baked at 80°C to form conversion coatings. Then, spot weldability of the plated steel sheets with the conversion coatings was evaluated. Table 3 presents the results. In the evaluation of the spot weldability, spot welds were performed under the same condition as that in the first experiment except that the number of spots was 1500 spots, and a condition of a nugget of the 1500th spot was observed. The evaluation of the spot weldability was performed based on a nugget diameter, and the sample in which the nugget diameter was 4 mm or more was regarded as ○ and the sample in which the nugget diameter was less than 4 mm was regarded as Δ.

**[TABLE 3]**

| SAMPLE No. | CHEMICAL SOLUTION | COATING WIGHT (g/m²) | SPOT WELDABILITY | REMARKS |
|---|---|---|---|---|
| 31 | AMMMONIUM ZIRCONIUM CARBONATE -SICILA -DIAMMONIUM HYDROGENPHOSPHATE | 0.3 | ○ | INVENTIVE EXAMPLE |
| 32 | AMMMONIUM ZIRCONIUM CARBONATE -SICILA -DIAMMONIUM HYDROGENPHOSPHATE | 0.6 | ○ | INVENTIVE EXAMPLE |
| 33 | TITANIUM FLUORIDE -SILANE COUPLING AGENT -VANADIUM OXYSULFATE | 0.3 | ○ | INVENTIVE EXAMPLE |
| 34 | TITANIUM FLUORIDE -SILANE COUPLING AGENT -VANADIUM OXYSULFATE | 0.6 | ○ | INVENTIVE EXAMPLE |
| 35 | ZIRCONIUM FLUORIDE -SILANE COUPLING AGENT -VANADIUM ACETATE | 0.3 | ○ | INVENTIVE EXAMPLE |
| 36 | ZIRCONIUM FLUORIDE -SILANE COUPLING AGENT -VANADIUM ACETATE | 0.6 | ○ | INVENTIVE EXAMPLE |
| 37 | CHROMIUM SULFATE -SIUCA -NICKEL NITRATE | 0.3 | ○ | INVENTIVE EXAMPLE |
| 38 | CHROMIUM SULFATE -SILICA -NICKEL NITRATE | 0.6 | ○ | INVENTIVE EXAMPLE |
| 39 | CHROMIUM SULFATE -SILICA -NICKEL NITRATE | 0.1 | Δ | INVENTIVE EXAMPLE |
| 40 | WITHOUT CONVERSION TREATMENT | NONE | Δ | INVENTIVE EXAMPLE |

As presented in Table 3, in samples No. 31 to No. 38, it was possible to obtain the nugget diameter of 4 mm or more even in a spot weld of the 1500th spot, and it was possible to obtain particularly excellent spot weldability. That is, it was proved that continuous spots was 1500 spots or more. As a result of the above, a good nugget can be obtained even though spot welds of 1500 spots or more are continuously performed. In a sample No. 39, since a thickness of the conversion coating exceeded a preferable range, the nugget diameter was less than 4 mm in a spot weld of the 1500th spot despite obtaining the nugget diameter of 4 mm or more in a spot weld of the 1000th spot. In a sample No. 40, since the conversion coating was not formed, the nugget diameter was less than 4 mm in a spot weld of the 1500th spot despite obtaining the nugget diameter of 4 mm or more in a spot weld of the 1000th spot.

### (Third experiment)

In a third experiment, cold-rolled steel sheets having various thicknesses were obtained using the steel type M as described above, and similarly to the first experiment, the annealing and the plating treatment were performed for these cold-rolled steel sheets on the continuous hot-dip plating line. A condition of gas wiping on the obverse and the reverse of the cold-rolled steel sheets was controlled independently, and the respective coating weights were adjusted as presented in Table 4. Thus, various plated steel sheets with plating layers were produced. As presented in Table 4, the thicknesses of the cold-rolled steel sheets were 0.5 mm to 1.8 mm. Then, evaluation of seam weldability of the plated steel sheets and corrosion resistance of inner surfaces thereof was performed. Table 4 presents the results. The evaluation of the seam weldability and the corrosion resistance of the inner surfaces thereof was performed similarly to the first experiment.

**[TABLE 4]**

| SAMPLE No. | THICKNESS (mm) | COATING WEIGHT (g/m²) | | PARAMETER PA | SEAM WELDABILITY | SPOT WELDABILITY | REMARKS |
|---|---|---|---|---|---|---|---|
| | | FIRST PLATING LAYER | SECOND PLATING LAYER | | | | |
| 51 | 0.5 | 42 | 18 | 3.95 | ⊚ | ○ | INVENTIVE EXAMPLE |
| 52 | 0.5 | 42 | 28 | -6.05 | ○ | ○ | INVENTIVE EXAMPLE |
| 53 | 0.8 | 45 | 20 | 6.94 | ⊚ | ○ | INVENTIVE EXAMPLE |
| 54 | 0.8 | 45 | 33 | -4.06 | ○ | ○ | INVENTIVE EXAMPLE |
| 55 | 1.2 | 38 | 22 | 5.26 | ⊚ | ○ | INVENTIVE EXAMPLE |
| 56 | 1.2 | 38 | 25 | 2.26 | ⊚ | ○ | INVENTIVE EXAMPLE |
| 57 | 1.2 | 38 | 29 | -1.74 | ○ | ○ | INVENTIVE EXAMPLE |
| 58 | 1.5 | 33 | 29 | -2.75 | ○ | ○ | INVENTIVE EXAMPLE |
| 59 | 1.5 | 35 | 23 | 5.25 | ⊚ | ○ | INVENTIVE EXAMPLE |
| 60 | 1.5 | 44 | 29 | 8.25 | ⊚ | ○ | INVENTIVE EXAMPLE |
| 61 | 1.8 | 36 | 27 | 6.24 | ⊚ | ○ | INVENTIVE EXAMPLE |
| 62 | 1.8 | 51 | 25 | 23.24 | ⊚ | ○ | INVENTIVE EXAMPLE |

As presented in Table 4, in samples No. 51, No. 53, No. 55, No. 56, and No. 59 to No. 62, in which a parameter PA (= (X - Y) - (26.7 - 13.3T)) exceeded "0" (zero), it was possible to obtain particularly excellent seam weldability. The sample No. 51 and the sample No. 52 are compared, and as apparent from comparing the sample No. 53 and the sample No. 54, it can be said that when the steel sheet, which has a thickness of 0.5 mm or 0.8 mm, is thin, the larger a difference of the coating weight between a first plating layer and a second plating layer is, the more excellent seam weldability can be obtained.

### (Fourth experiment)

In a fourth experiment, a cold-rolled steel sheet whose thickness was 1.6 mm was obtained using the steel type F as described above, and similarly to the first experiment, the annealing and the plating treatment were performed for this cold-rolled steel sheet on the continuous hot-dip plating line. A coating weight of a first plating layer was 33 g/m² and a coating weight of a second plating layer was 8 g/m². A temperature of a plating bath was 690°C, and when cooling after the plating treatment was performed by air cooling, an Al-Si alloy layer disappeared in the second plating layer and an external appearance exhibited black. Then, evaluation of spot weldability of the plated steel sheet was performed. In the evaluation of the spot weldability, spot welds were performed under the same condition as that in the first experiment except that the number of spots was 2000 spots, and a condition of a nugget of the 2000th spot was observed. As a result, it was possible to obtain a nugget diameter of 5.1 mm or more even in a spot weld of the 2000th spot and obtain particularly excellent spot weldability. That is, it was proved that continuous spots were 2000 spots or more with the disappearance of the Al-Si alloy layer.

### INDUSTRIAL APPLICABILITY

The present invention can be used in a manufacturing industry and a utilization industry of a plated steel sheet which is used for a fuel tank of a truck or a bus, or others, for example.

## Claims

1. A plated steel sheet for a fuel tank comprising:
a steel sheet;
a first plating layer on a first surface of the steel sheet; and
a second plating layer on a second surface of the steel sheet,
wherein the steel sheet comprises a chemical composition represented by, in mass%,
C: 0.0005% to 0.0800%,
Si: 0.003% to 0.500%,
Mn: 0.05% to 0.80%,
P: 0.005% to 0.050%,
S: 0.100% or less,
Al: 0.080% or less,
N: 0.0050% or less,
Ti: 0.000% to 0.100%,
Nb: 0.000% to 0.050%,
B: 0.000% to 0.0100%, and
the balance: Fe and impurities,
wherein the first plating layer comprises:
a first Al-Fe-Si alloy layer on the first surface; and
a first Al-Si alloy layer on the first Al-Fe-Si alloy layer,
wherein the second plating layer comprises a second Al-Fe-Si alloy layer on the second surface,
wherein a coating weight of the first plating layer is 31 g/m² to 60 g/m², and
wherein a coating weight of the second plating layer is 5 g/m² to 29 g/m²,
wherein the first plating layer is inside the tank body and the second plating layer is outside the tank body.

2. The plated steel sheet for a fuel tank according to claim 1, wherein the second plating layer comprises a second Al-Si alloy layer on the second Al-Fe-Si alloy layer.

3. The plated steel sheet for a fuel tank according to claim 1 or 2, wherein in the chemical composition of the steel sheet
Ti: 0.001 to 0.100%,
Nb: 0.001 to 0.050%, or
B: 0.0003% to 0.0100%, or
any combination thereof is satisfied.

4. The plated steel sheet for a fuel tank according to any one of claims 1 to 3, wherein a relationship of "(X - Y) - (26.7 - 13.3T) > 0" holds wherein X (g/m²) denotes the coating weight of the first plating layer, Y (g/m²) denotes the coating weight of the second plating layer, and T (mm) denotes a thickness of the steel sheet.

5. The plated steel sheet for a fuel tank according to any one of claims 1 to 4, further comprising a conversion coating that contains Cr, Zr, Ti, Si, or V, or a compound of any combination thereof on the second plating layer,
wherein a coating weight of the conversion coating is 50 mg/m² to 1000 mg/m².

6. A fuel tank comprising
a tank body made of the plated steel sheet according to any one of claims 1 to 5, wherein the first plating layer is inside the tank body and the second plating layer is outside the tank body.

## Patentansprüche

1. Ein plattiertes Stahlblech für einen Kraftstofftank, umfassend:
ein Stahlblech;
eine erste Plattierungsschicht auf einer ersten Oberfläche des Stahlblechs; und
eine zweite Plattierungsschicht auf einer zweiten Oberfläche des Stahlblechs,
wobei das Stahlblech eine chemische Zusammensetzung umfasst, dargestellt durch, in Massen-%,
C: 0,0005% bis 0,0800%,
Si: 0,003% bis 0,500%,
Mn: 0,05% bis 0,80%,
P: 0,005% bis 0,050%,
S: 0,100% oder weniger,
Al: 0,080% oder weniger,
N: 0,0050% oder weniger,
Ti: 0,000% bis 0,100%,
Nb: 0,000% bis 0,050%,
B: 0,000% bis 0,0100%, und
den Rest: Fe und Verunreinigungen,
wobei die erste Plattierungsschicht umfasst:
eine erste Al-Fe-Si-Legierungsschicht auf der ersten Oberfläche; und
eine erste Al-Si-Legierungsschicht auf der ersten Al-Fe-Si-Legierungsschicht, wobei die zweite Plattierungsschicht eine zweite Al-Fe-Si-Legierungsschicht auf der zweiten Oberfläche umfasst,
wobei ein Beschichtungsgewicht der ersten Plattierungsschicht 31 g/m² bis 60 g/m² beträgt und
wobei ein Beschichtungsgewicht der zweiten Plattierungsschicht 5 g/m² bis 29 g/m² beträgt,
wobei sich die erste Plattierungsschicht innerhalb des Tankkörpers und die zweite Plattierungsschicht sich außerhalb des Tankkörpers befindet.

2. Das plattierte Stahlblech für einen Kraftstofftank gemäß Anspruch 1, wobei die zweite Plattierungsschicht eine zweite Al-Si-Legierungsschicht auf der zweiten Al-Fe-Si-Legierungsschicht umfasst.

3. Das plattierte Stahlblech für einen Kraftstofftank gemäß Anspruch 1 oder 2, wobei in der chemischen Zusammensetzung des Stahlblechs
Ti: 0,001 bis 0,100%,
Nb: 0,001 bis 0,050% oder
B: 0,0003% bis 0,0100%, oder
eine beliebige Kombination davon erfüllt ist.

4. Das plattierte Stahlblech für einen Kraftstofftank gemäß einem der Ansprüche 1 bis 3, wobei eine Beziehung von "(X - Y) - (26,7 - 13,3T) > 0" gilt, wobei X (g/m²) das Beschichtungsgewicht der ersten Plattierungsschicht bezeichnet, Y (g/m²) das Beschichtungsgewicht der zweiten Plattierungsschicht bezeichnet und T (mm) eine Dicke des Stahlblechs bezeichnet.

5. Das plattierte Stahlblech für einen Kraftstofftank gemäß einem der Ansprüche 1 bis 4, ferner umfassend eine Umwandlungsschicht, welche Cr, Zr, Ti, Si oder V, oder eine Verbindung einer beliebigen Kombination davon auf der zweiten Plattierungsschicht enthält,
wobei ein Beschichtungsgewicht der Umwandlungsschicht 50 mg/m² bis 1000 mg/m² beträgt.

6. Ein Kraftstofftank, umfassend
einen Tankkörper, hergestellt aus dem plattierten Stahlblech gemäß einem der Ansprüche 1 bis 5,
wobei sich die erste Plattierungsschicht innerhalb des Tankkörpers und die zweite Plattierungsschicht sich außerhalb des Tankkörpers befindet.

## Revendications

1. Tôle d'acier plaquée pour un réservoir de carburant comprenant :
une tôle d'acier ;
une première couche de placage sur une première surface de la tôle d'acier ; et
une seconde couche de placage sur une seconde surface de la tôle d'acier,
dans laquelle la tôle d'acier comprend une composition chimique représentée par, en % en masse,
C : 0,0005 % à 0,0800 %,
Si : 0,003 % à 0,500 %,
Mn : 0,05 % à 0,80 %,
P : 0,005 % à 0,050 %,
S : 0,100 % ou inférieur,
Al : 0,080 % ou inférieur,
N : 0,0050 % ou inférieur,
Ti : 0,000 % à 0,100 %,
Nb : 0,000 % à 0,050 %,
B : 0,000 % à 0,0100 %, et
le reste : Fe et des impuretés,
dans laquelle la première couche de placage comprend :
une première couche d'alliage d'Al-Fe-Si sur la première surface ; et
une première couche d'alliage d'Al-Si sur la première couche d'alliage d'Al-Fe-Si,
dans laquelle la seconde couche de placage comprend une seconde couche d'alliage d'Al-Fe-Si sur la seconde surface,
dans laquelle une masse de revêtement de la première couche de placage est de 31 g/m² à 60 g/m², et
dans laquelle une masse de revêtement de la seconde couche de placage est de 5 g/m² à 29 g/m²,
dans laquelle la première couche de placage se trouve à l'intérieur du corps de réservoir et la seconde couche de placage se trouve à l'extérieur du corps de réservoir.

2. Tôle d'acier plaquée pour un réservoir de carburant selon la revendication 1, dans laquelle la seconde couche de placage comprend une seconde couche d'alliage d'Al-Si sur la seconde couche d'alliage d'Al-Fe-Si.

3. Tôle d'acier plaquée pour un réservoir de carburant selon la revendication 1 ou 2, dans laquelle dans la composition chimique de la tôle d'acier
Ti : 0,001 à 0,100 %,
Nb : 0,001 à 0,050 %, ou
B : 0,0003 % à 0,0100 %, ou
toute combinaison de ceux-ci est satisfaite.

4. Tôle d'acier plaquée pour un réservoir de carburant selon l'une quelconque des revendications 1 à 3, dans laquelle une relation de "(X - Y) - (26,7 - 13,3T) > 0" est conservée dans laquelle X (g/m²) indique la masse de revêtement de la première couche de placage, Y (g/m²) indique la masse de revêtement de la seconde couche de placage, et T (mm) indique une épaisseur de la tôle d'acier.

5. Tôle d'acier plaquée pour un réservoir de carburant selon l'une quelconque des revendications 1 à 4, comprenant de plus un revêtement de conversion qui contient Cr, Zr, Ti, Si, ou V, ou un composé d'une combinaison quelconque de ceux-ci sur la seconde couche de placage,
dans laquelle une masse de revêtement du revêtement de conversion est de 50 mg/m² à 1 000 mg/m².

6. Réservoir de carburant comprenant
un corps de réservoir constitué de la tôle d'acier plaquée selon l'une quelconque des revendications 1 à 5,
dans lequel la première couche de placage se trouve à l'intérieur du corps de réservoir et la seconde couche de placage se trouve à l'extérieur du corps de réservoir.
